# EUROPÄISCHE PATENTSCHRIFT

(11) **EP 2 041 218 B1**
(45) Veröffentlichungstag und Bekanntmachung des Hinweises auf die Patenterteilung: **23.09.2009**
(21) Anmeldenummer: 07765785.6
(22) Anmeldetag: 04.07.2007
(51) Int. Cl.: C08K 13/00

(54) **ZUSAMMENSETZUNG AUF DER BASIS VON ORGANOSILICIUMVERBINDUNGEN**
COMPOSITION BASED ON ORGANOSILICON COMPOUNDS
COMPOSITION À BASE DE COMPOSÉS D'ORGANOSILICIUM

(30) Priorität: 18.07.2006 DE 102006033236
(43) Veröffentlichungstag der Anmeldung: 01.04.2009
(73) Patentinhaber: Wacker Chemie AG, 81737 München (DE)
(72) Erfinder: JERSCHOW, Peter, 84489 Burghausen (DE)
(74) Vertreter: Budczinski, Angelika
(86) Internationale Anmeldenummer: PCT/EP2007/056719
(87) Internationale Veröffentlichungsnummer: WO 2008/009555

(56) Entgegenhaltungen:
- EP-A2- 1 101 798
- DE-A1- 10 123 935
- US-A- 5 008 307

## Beschreibung

Die Erfindung betrifft eine Zusammensetzung auf der Basis von Organosiliciumverbindungen und Aluminiumoxid, ein Verfahren zur Herstellung dieser Zusammensetzung und ein Granulat, das diese Zusammensetzung enthält oder aus dieser besteht sowie ein Verfahren zur Herstellung des Granulats.

Siliconkautschuk in Form von Granulat bereitzustellen ist für automatisierte Extrusion oder Spritzguss von Bedeutung. Ein Problem ist, dass bisher granulierter Siliconkautschuk nicht vollständig lebensmittelkonform und nur im Härtebereich 60 bis 80 Shore A erhältlich ist.

In EP-A 1028140 wird die Herstellung von Pellets aus Siliconkautschuk mittels geeigneter Additive beschrieben.

Gegenstand der Erfindung sind Zusammensetzungen enthaltend Organosiliciumverbindungen und Aluminiumoxidpulver mit einer spezifischen Oberfläche von mindestens 50 m²/g und einer mittleren Größe der Primärteilchen von 1 bis 50 nm.

Bei den erfindungsgemäß eingesetzten Organosiliciumverbindungen handelt es sich bevorzugt um solche enthaltend Einheiten der Formel

RₐR¹_{b}Y_{c}SiO_{(4-a-b-c)/2} (I),

wobei
R gleich oder verschieden sein kann und Wasserstoffatom oder gegebenenfalls substituierter, SiC-gebundener, aliphatisch gesättigter Kohlenwasserstoffrest bedeutet,
R¹ gleich oder verschieden sein kann und SiC-gebundener, aliphatisch ungesättigter Kohlenwasserstoffrest bedeutet,
Y gleich oder verschieden sein kann und Hydroxylrest oder hydrolysierbare Reste bedeutet,
a 0, 1, 2 oder 3 ist
b 0, 1, 2 oder 3 ist und
c 0, 1, 2 oder 3, bevorzugt 1 oder 0, besonders bevorzugt 0, ist,
mit der Maßgabe, dass die Summe a+b+c kleiner oder gleich 4 beträgt.

Bevorzugt handelt es sich bei den erfindungsgemäß eingesetzten Organosiliciumverbindungen um Organopolysiloxane, d.h. Verbindungen enthaltend Einheiten der Formel (I) mit a+b+c kleiner oder gleich 3.

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Biphenyl-, Naphtyl- und Anthryl-und Phenanthrylrest; Alkarylreste, wie O-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R sind halogenierte Alkylreste, wie der 3-Chlorpropyl-, der 3,3,3-Trifluorpropyl- und der Perfluorhexylethylrest, halogenierte Arylreste, wie der p-Chlorphenyl- und der p-Chlorbenzylrest.

Bevorzugt handelt es sich bei Rest R um Wasserstoffatom und gegebenenfalls substituierte Kohlenwasserstoffreste mit 1 bis 8 Kohlenstoffatomen. Besonders bevorzugt handelt es sich bei Rest R gleich gegebenenfalls substituierte Kohlenwasserstoffreste um Methyl-, Ethyl-, Phenyl- und 3,3,3-Trifluorpropylrest, insbesondere um den Methylrest.

Beispiele für Rest R¹ sind der Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest R¹ um Alkenylreste mit 2 bis 8 Kohlenstoffatomen, besonders bevorzugt um den Vinylrest.

Bevorzugt handelt es sich bei Rest Y um Hydroxylrest, Organyloxyrest, wie Methoxy-, Ethoxy-, n-Propoxy-, i-Propoxy-, n-Butoxy-, i-Butoxy-, s-Butoxy-, tert-Butoxy- und 2-Methoxyethoxyrest, Acyloxyreste, wie der Acetoxyrest, Aminoreste, wie Methylamino-, Dimethylamino-, Ethylamino-, Diethylamino- und Cyclohexylaminorest, Amidoreste, wie N-Methylacetamido- und Benzamidorest, Aminoxyreste, wie der Diethylaminoxyrest, Oximoreste, wie Metyhlethylketoximo- und Methylisobutylketoximorest, und Enoxyreste, wie der 2-Propenoxyrest.

Besonders bevorzugt handelt es sich bei Rest Y um den Hydroxylrest, Reste -OR¹ mit R¹ gleich der o.g. Bedeutung, Acetoxy- und Oximoreste, insbesondere um Hydroxylrest, Methoxy-, Ethoxy- und Acetoxyrest, ganz besonders bevorzugt Ethoxy- und Acetoxyrest.

Beispiele für erfindungsgemäß eingesetzte Organosiliciumverbindungen sind lineare Siloxane, wie Dimethylpolysiloxane, Phenylmethylpolysiloxane, Trifluorpropylpolysiloxane und Ethylpropylpolysiloxane, Dimethyl/Methylvinyl-polysiloxane mit 2-100 Vinylgruppen, Methylvinylpolysiloxane, Diphenyl/Phenylvinylpolysiloxane mit 2-100 Vinylgruppen, Phenylvinylpolysiloxane, Ethylmethyl/Ethylvinylpolysiloxane.

Die erfindungsgemäß eingesetzten Organosiliciumverbindungen weisen eine Viskosität von bevorzugt 10 000 bis 10⁹ mPa·s, besonders bevorzugt von 100 000 bis ·10⁷ mPa·s, insbesondere von 10⁶ bis 9·10⁶ mPa·s, jeweils gemessen bei 25°C, auf.

Die erfindungsgemäßen Zusammensetzungen enthalten Organosiliciumverbindungen in Mengen von vorzugsweise 30 bis 90 Gewichtsteilen, besonders bevorzugt 40 bis 80 Gewichtsteilen, ganz besonders bevorzugt 60 bis 75 Gewichtsteilen, jeweils bezogen auf 100 Gewichtsteile der erfindungsgemäßen Zusammensetzung.

Bei dem erfindungsgemäß eingesetzten Aluminiumoxid handelt es sich bevorzugt um hochdisperses, pyrogen, also durch Flammenhydrolyse von wasserfreiem Aluminiumchlorid oder einer anderen wasserfreien hydrolysierbaren Aluminiumverbindung, hergestelltes Aluminiumoxid. Falls erwünscht, kann das Aluminiumoxid auch im Gemisch mit anderen Metalloxiden vorliegen, was jedoch nicht bevorzugt ist.

Die Herstellung von Aluminiumoxid durch Flammenhydrolyse ist allgemein bekannt. Hierzu sei beispielsweise auf WO2005061385A und WO2005113442A verwiesen.

Bevorzugt wird das erfindungsgemäß eingesetzte Aluminiumoxidpulver durch Flammenhydrolyse dadurch hergestellt, dass Aluminiumchlorid ggf. im Gemisch mit anderen flüchtigen Metallverbindungen, wie z.B. Chloriden von Ti, Si, Zr, Zn, Mg, Y, V, W, Ta, Ce oder B, verdampft wird, wobei der Dampf mit Hilfe eines Trägergases, wie z.B. trockener Luft, in eine Mischkammer geleitet und mit H₂ und Luftüberschuss, ggf. unter Zufuhr von Heizleistung, vermischt wird und das Gemisch anschließend beim Einleiten in die Reaktionskammer gezündet wird. Das gebildete feste Aluminiumoxid ggf. im Gemisch mit anderen Metalloxiden wird abgetrennt und anschließend - falls erwünscht - mit Wasserdampf behandelt.

Das erfindungsgemäß eingesetzte Aluminiumoxidpulver hat eine spezifische Oberfläche (BET) von bevorzugt 50 bis 400 m²/g, besonders bevorzugt 70 bis 300 m²/g, insbesondere 80 bis 150 m²/g.

Das erfindungsgemäß eingesetzte Aluminiumoxidpulver hat eine mittlere Größe der Primärteilchen von bevorzugt 10 bis 20 nm, besonders bevorzugt 12 bis 14 nm.

Falls erwünscht, kann die Oberfläche des erfindungsgemäß eingesetzten Aluminiumoxids chemisch modifiziert sein, was jedoch nicht bevorzugt ist.

Bei dem erfindungsgemäß eingesetzten Aluminiumoxidpulver handelt es sich um ein handelsübliches Produkt.

Die erfindungsgemäßen Zusammensetzungen enthalten Aluminiumoxidpulver in Mengen von vorzugsweise 0,1 bis 20 Gewichtsteilen, besonders bevorzugt 0,2 bis 14 Gewichtsteilen, ganz besonders bevorzugt 0,3 bis 3 Gewichtsteilen, jeweils bezogen auf 100 Gewichtsteile der erfindungsgemäßen Zusammensetzung.

Die erfindungsgemäßen Zusammensetzungen können außer Organosiliciumverbindungen und Aluminiumoxid noch weitere Stoffe, wie Wasser, Borsäure und andere, von Aluminiumoxid verschiedene pulverförmige Stoffe, wie z.B. Füllstoffe, enthalten.

Beispiele für gegebenenfalls eingesetzte Füllstoffe sind verstärkende und/oder nichtverstärkende Füllstoffe.

Beispiele für verstärkende Füllstoffe, also Füllstoffe mit einer BET-Oberfläche von mindestens 50 m²/g, sind pyrogen hergestellte Kieselsäure, gefällte Kieselsäure und Ruß, wie Furnace-und Acetylenruß.

Die genannten Kieselsäurefüllstoffe können hydrophilen Charakter haben oder nach bekannten Verfahren hydrophobiert sein, wobei Kieselsäurefüllstoffe mit hydrophilem Charakter bevorzugt sind.

Bevorzugt handelt es sich bei dem gegebenenfalls eingesetzten verstärkenden Füllstoff um hydrophile, pyrogen hergestellte Kieselsäure mit einer BET-Oberfläche von 50 bis 400 m²/g, besonders bevorzugt 150 bis 300 m²/g.

Beispiele für nichtverstärkende Füllstoffe sind Quarz, Diatomeenerde, Calciumsilikat, Zirkoniumsilikat, Zeolithe, Metalloxidpulver, wie Titan-, Eisen-, oder Zinkoxide bzw. deren Mischoxide, Bariumsulfat, Calciumcarbonat, Gips, Siliciumnitrid, Siliciumcarbid, Bornitrid, Aluminiumhydroxid (ATH), Glimmer, Talkum, Kaolin, Metalltitanate und -zirkonate sowie Polytetrafluorethylenpulver. Des Weiteren können als Füllstoffe faserige Komponenten, wie Glasfasern und Kunststofffasern, eingesetzt werden. Die BET-Oberfläche dieser Füllstoffe liegt vorzugsweise unter 50 m²/g.

Die erfindungsgemäßen Massen enthalten bevorzugt verstärkenden Füllstoff oder eine Mischung aus verstärkendem und nichtverstärkendem Füllstoff.

Die erfindungsgemäßen Zusammensetzungen werden bevorzugt mit so viel von Aluminiumoxid verschiedenem Füllstoff aufgefüllt, bis die gewünschte Konsistenz erreicht wird, die abhängig vom Anwendungszweck ist.

Die erfindungsgemäßen Zusammensetzungen haben bevorzugt eine plastilinähnliche Konsistenz, eine hohe Viskosität und Plastizität (=Fellfestigkeit) oder liegen in Form von Granulat vor.

Die erfindungsgemäßen Zusammensetzungen können vernetzbar oder unvernetzbar sein.

Die erfindungsgemäßen Massen eignen sich besonders gut zur Herstellung von Kabeln, Kabelisolierungen, -ummantelungen, Formteilen, Profilen, formstabilen unvulkanisierten Profilen und fellfesten Textilbeschichtungen.

Bei den erfindungsgemäßen Massen kann es sich um beliebige, bisher bekannte Typen von zu Elastomeren vernetzbaren Massen auf der Basis von Organosiliciumverbindungen handeln, wie beispielsweise einkomponentige oder zweikomponentige bei Raumtemperatur (sog. RTV-Massen) oder erhöhter Temperatur (sog. HTV-Massen) vulkanisierbare Organopolysiloxanmassen, wobei die Vernetzung durch Kondensation, Anlagerung von Si-gebundenem Wasserstoff an aliphatische Mehrfachbindung, peroxidisch durch Bildung von Radikalen oder durch Einwirkung von Strahlen erfolgen kann. Die vernetzbaren Massen können dabei frei von von Aluminiumoxid verschiedenen Füllstoffen sein, können aber auch aktive oder nicht aktive, von Aluminiumoxid verschiedene Füllstoffe enthalten, bevorzugt sind von Aluminiumoxid verschiedene Füllstoffe enthalten.

Art und Menge der üblicherweise in solchen Massen verwendeten Komponenten sind bereits bekannt. Hierzu sei beispielsweise auf US-A 5,268,441, DE-A 44 01 606, DE-A 44 05 245 und DE-A 43 36 345 verwiesen.

Das erfindungsgemäß eingesetzte Aluminiumoxid kann dabei beliebig mit den anderen Komponenten der erfindungsgemäßen vernetzbaren Massen vermischt werden. So kann es als letzter Schritt in die ansonsten fertige Siliconkautschukformulierung eingemischt oder während der Herstellung der Siliconkautschukmischung eingearbeitet werden. Das Aluminiumoxid kann aber auch in eine bzw. mehrere der eingesetzten Komponenten vorgemischt werden.

Bei den jeweiligen zur Herstellung der erfindungsgemäßen Zusammensetzungen eingesetzten Komponenten kann es sich jeweils um eine einzelne Art einer solchen Komponente, wie auch um ein Gemisch aus mindestens zwei verschiedenen Arten einer solchen Komponente handeln.

Der Mischprozess zur Herstellung der erfindungsgemäßen Massen ist bevorzugt ein einfaches mechanisches Vermengen. Je nach Konsistenz und Viskosität des Basismediums kann der Mischprozess an Walzwerken, Knetern, Dissolvern, Z-Mischern, Kugelmühlen oder einfachen Rührwerken erfolgen, wobei Walzwerke, Kneter und Z-Mischer bevorzugt sind. Der Mischprozess wird vorzugsweise schon der Einfachheit halber bei Umgebungsdruck durchgeführt. Jedoch ist auch ein Mischen bei reduziertem oder erhöhtem Druck möglich. Ebenso der Einfachheit halber wird der Mischprozess bevorzugt bei Umgebungstemperatur durchgeführt. Es ist jedoch auch möglich, bei erhöhter Temperatur oder unter Kühlen zu mischen. Falls erwünscht, kann anschließend granuliert werden. Dies kann nach Vereinigung der einzelnen Komponenten der erfindungsgemäßen Zusammensetzung mit üblichen Granuliermitteln, wie beispielsweise der Lochplatte und dem rotierenden Messer, nach bekannter Art und Weise erfolgen.

Ein weiterer Gegenstand der Erfindung ist ein Verfahren zur Herstellung von Granulaten auf der Basis von Organosiliciumverbindungen, dadurch gekennzeichnet, dass in einer Mischvorrichtung Organosiliciumverbindungen und Aluminiumoxid mit einer spezifischen Oberfläche von mindestens 50 m²/g und einer mittleren Größe der Primärteilchen von 1 bis 50 nm miteinander vermischt werden und anschließend mit Granuliermitteln das Granulat ausgeformt wird.

Bevorzugt handelt es sich bei dem Granuliermittel um einen Extruder, wie z.B. Einschneckeh-, Zweischnecken- oder Kolbenextruder, oder eine Zahnradpumpe, die jeweils mit einer Lochplatte und einem rotierenden Messer ausgerüstet sind.

Falls erwünscht, kann die Herstellung der erfindungsgemäßen granulierbaren Zusammensetzung auch mittels kontinuierlicher beheizter Mischeinrichtungen durchgeführt werden.

Die Zusammensetzung kann direkt aus der Mischeinrichtung granuliert werden. Die Zusammensetzung kann auch in einem zweiten Schritt nach einer Zwischenbehandlung, wie z.B. Einfärben, Zugabe von beliebigen Additiven, granuliert werden.

Das erfindungsgemäße Verfahren zur Herstellung von Granulat wird bevorzugt bei einer Temperatur von 20 bis 50°C und einem Druck der umgebenden Atmosphäre, also etwa 900 bis 1100 hPa durchgeführt, wobei der Druck im Granuliermittel bis zu 500 000 hPa betragen kann.

Das erfindungsgemäße Granulat wird bevorzugt unmittelbar nach dem Abschneiden mit dem rotierenden Messer leicht talkumiert und möglichst rasch auf 20°C abgekühlt.

Das erfindungsgemäße bzw. erfindungsgemäß hergestellte Granulat weist eine mittlere Teilchengröße von bevorzugt 1 bis 100 mm, besonders bevorzugt 2 bis 9 mm, auf. Bevorzugt hat das erfindungsgemäße Granulat eine typische zylindrische Granulatstruktur mit einem Durchmesser von bevorzugt 1 bis 100 mm, besonders bevorzugt von 2 bis 9 mm, und eine Höhe von bevorzugt 1 bis 100 mm, besonders bevorzugt von 2 bis 9 mm.

Die erfindungsgemäßen Massen haben den Vorteil, dass sie einfach in der Herstellung und gut verarbeitbar sind.

Das erfindungsgemäße Verfahren hat den Vorteil, dass gut rieselfähiges Granulat hergestellt werden kann.

Das erfindungsgemäße Granulat hat den Vorteil, dass es eine Lagerbeständigkeit und damit einwandfreie Verarbeitbarkeit von mindestens 6 Monaten aufweist.

Des Weiteren hat das erfindungsgemäße Granulat den Vorteil, dass es sich automatisch fördern und auf allen konventionellen Anlagen für die Verarbeitung von Silikonkautschuk verarbeiten läßt (Pressvulkanisation, Transferpressen, Extrusion, Spritzguß, Kalandrieren etc.)

Weitere Vorteile sind eine im ungranulierten Zustand erhöhte Fellfestigkeit, verbesserte Kalandrierbarkeit (=geringere Klebrigkeit an Walzen und Kalandern) und Lebensmittelechtheit.

Die erfindungsgemäßen Granulate können nun zu allen Zwecken verwendet werden, zu denen auch bisher Granulate auf der Basis von Organosiliciumverbindungen verwendet worden sind. Hierzu sei beispielsweise die Herstellung von Profilen, Kabeln, Schläuchen, Platten, Folien, Schaum und Formteilen erwähnt.

Falls es sich bei den erfindungsgemäßen Zusammensetzungen um Granulate oder um fellfeste Mischungen handelt, können diese vernetzbar oder unvernetzbar ausgerüstet sein. Im unvernetzbaren Zustand können diese Granulate als Additive verwendet werden, wie in DE-A 10330287 beschrieben. Im vernetzbaren Zustand enthalten die Granulate eines der für Siliconkautschuke üblichen Vernetzungssysteme.

Die erfindungsgemäßen Zusammensetzungen können unter den gleichen Bedingungen vernetzen gelassen werden wie bisher bekannte vernetzbare Massen auf der Basis von Organosiliciumverbindungen. Dabei können als Herstellverfahren alle gängigen Prozesse zur Verarbeitung von Siliconkautschuken angewandt werden. Beispiele hierfür sind Kalandrieren, Formpressen, Formspritzen und Extrudieren.

Ein weiterer Gegenstand der vorliegenden Erfindung sind Formkörper, hergestellt durch Vernetzung der erfindungsgemäßen Zusammensetzungen.

Bei den erfindungsgemäßen Formkörpern kann es sich um die gleichen Formkörper handeln, die auch bisher aus vernetzbaren Massen auf der Basis von Organosiliciumverbindungen hergestellt worden sind. Beispielen für die erfindungsgemäßen Formkörper sind Granulate, Schläuche, Folien, Dichtungen, Spritzgussteile, Profile, Kabel, Platten, Rohrinnenauskleidungen sowie Beschichtungen.

Bei den erfindungsgemäßen Zusammensetzungen auf der Basis von Organosiliciumverbindungen kann es sich um unter Ausschluss von Wasser lagerfähige, bei Zutritt von Wasser bei Raumtemperatur durch Kondensation zu Elastomeren vernetzbare Massen (Vernetzungstyp I) handeln.

Bei den erfindungsgemäßen durch Kondensation vernetzbaren Zusammensetzungen handelt es sich vorzugsweise um solches, die
(a) kondensationsfähige Gruppen aufweisende Organosiliciumverbindung,
(b) Organosiliciumverbindung mit mindestens drei Si-gebundenen hydrolysierbaren Resten,
(c) Kondensationskatalysator,
(d) Aluminiumoxid mit einer spezifischen Oberfläche von mindestens 50 m²/g und einer mittleren Größe der Primärteilchen von 1 bis 50 nm und gegebenenfalls
(e) weitere Stoffe
   enthalten.

Im Rahmen der vorliegenden Erfindung sollen unter der Bezeichnung "kondensationsfähige" Reste auch solche Reste verstanden werden, die auch einen gegebenenfalls vorangehenden Hydrolyseschritt miteinschließen.

Bei den erfindungsgemäßen durch Kondensation vernetzbaren Massen kann es sich um Einkomponenten-Massen wie auch um Zweikomponenten-Massen handeln, wobei in letzterer eine Komponente nicht gleichzeitig die Bestandteile (a), (b) und (c) enthält.

Als kondensationsfähige Gruppen aufweisende Organosiliciumverbindung (a) können Organopolysiloxane enthaltend Einheiten der Formel (I) eingesetzt werden, mit der Maßgabe, dass die Summe a+b+c kleiner oder gleich 3 ist und pro Molekül mindestens ein Rest Y anwesend ist, bevorzugt mindestens zwei.

Beispiele für erfindungsgemäß eingesetzte Organopolysiloxane (a) sind α,ω-Dihydroxypolydimethylsiloxane.

Vorzugsweise werden als Komponente (a) solche der allgemeinen Formel

HO (SiR²₂O)_{III} SiR²₂O²₂-OH (II)

eingesetzt, wobei R² gleiche oder verschiedene, gegebenenfalls substituierte, einwertige Kohlenwasserstoffreste bedeuten und m eine ganze Zahl im Wert von mindestens 20, bevorzugt eine Zahl von 50 bis 100000, ist.

Obwohl durch Formel (II) nicht dargestellt, können zusätzlich zu den Diorganosiloxaneinheiten (SiR²₂O) noch andere Siloxaneinheiten, wie solche der Formeln R²SiO_{3/2}, R²₃SiO_{1/2} und SiO_{4/2} vorliegen, wobei R² jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht der Organopolysiloxane (a).

Beispiele für Reste R² sind die für Rest R und R¹ oben angegebenen Beispiele.

Bevorzugt handelt es sich bei Rest R² um Reste mit 1 bis 18 Kohlenstoffatomen, besonders bevorzugt um Propyl-, Hexyl- und Octylreste, insbesondere um den Methylrest.

Als Organosiliciumverbindungen mit mindestens drei Si-gebundenen hydrolysierbaren Gruppen (b) werden vorzugsweise Silane der allgemeinen Formel

R³₄₋ₙSiZₙ (III)

und/oder deren 2 bis 10 Siliciumatome je Molekül aufweisende Teilhydrolysate verwendet, wobei
R³ gleich oder verschieden sein kann und eine für R² angegebene Bedeutung hat,
n 3 oder 4 ist und
Z gleiche oder verschiedene hydrolysierbare Gruppen bedeutet, wie Amino-, Amido-, Aminoxy-, Oximogruppe, wie z.B. -ON=C(CH₃)(C₂H₅), Alkoxy-, wie z.B. Methoxy- und Ethoxy-, Alkoxyalkoxy-, wie z.B. CH₃-O-C₂H₅-O-, Alkenyloxy-, wie z.B. H₂C=(CH₃)CO-, und Acetoxygruppen.

Bevorzugt handelt es sich bei der hydrolysierbaren Gruppe Z um Alkoxy- oder Acetoxygruppen.

Bevorzugt handelt es sich bei Rest R³ um Propyl-, Hexyl-, Octyl-, Vinyl- und Methylreste, wobei Vinyl- und Methylreste besonders bevorzugt sind.

Die Organosiliciumverbindung (b) wird vorzugsweise in einer Menge von 2 bis 10 Gewichtsteilen, je 100 Gewichtsteile Organosiliciumverbindung (a), eingesetzt.

Vorzugsweise handelt es sich bei dem Kondensationskatalysator (c) um (Organo-)Metallverbindungen, wie beispielsweise die Salze von Carbonsäuren, die Alkoholate und die Halogenide der Metalle Pb, Zn, Zr, Ti, Sb, Fe, Cd, Sn, Ba, Ca und Mn, wie Zinn(II)octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat, Titanalkoholat und Organotitanverbindungen mit mindestens einer Si-O-Ti-Bindung.

Kondensationskatalysator (c) wird vorzugsweise in einer Menge von 0,1 bis 2 Gewichtsteilen, je 100 Gewichtsteile Organosiliciumverbindung (a), eingesetzt.

Der jeweiligen Anwendung entsprechend können den erfindungsgemäßen zu Elastomeren vulkanisierbaren Massen weitere Stoffe (e) zugesetzt werden, mit der Maßgabe, dass die Zusätze (e) unterschiedlich sind zu Komponente (a), (b), (c) und (d).

Beispiele für solche weiteren Stoffe (e) sind Füllstoffe, wie z.B. die oben beschriebenen Stoffe zur Verbesserung der Oberflächeneigenschaften, wie Haftvermittler, Verarbeitungshilfsmittel, wie etwa Weichmacher, Pigmente, lösliche Farbstoffe, Duftstoffe, Fungizide, rein organische Harze, Korrosionsinhibitoren, Oxidationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wobei es sich bei Komponente (e) bevorzugt um Füllstoffe, Weichmacher und Haftvermittler handelt.

Beispiele für Weichmacher, die als Komponente (e) eingesetzt werden können, sind mit Trimethylsilylgruppen oder Hydroxygruppen terminierte Polydimethylsiloxane mit einer Viskosität von maximal 1000 mm²/s bei 25°C oder auch Diphenylsilandiol.

Beispiele für Haftvermittler sind Aminosilane, wie Aminoethylaminopropyltriethoxysilan, oder Polysiloxane, die AminoethylaminopropylsiLoxygruppen enthalten.

Beispiele für Hitzestabilisatoren sind Übergangsmetallfettsäuresalze, wie Eisen- oder Ceroctoat, Titanbuthylat, Übergangsmetallsilanolate, wie Eisensilanolat, sowie Cer(IV)-Verbindungen, oder Oxide wie z.B. Eisen- bzw. Titanoxid und deren Gemische sowie diverse Ruße.

Über die Komponenten (a) bis (e) hinausgehend enthalten die erfindungsgemäßen durch Kondensation vernetzbaren Massen vorzugsweise keine weiteren Stoffe.

Die Herstellung der erfindungsgemäßen durch Kondensation vernetzbaren Massen auf der Basis von Organosiliciumverbindungen kann nach bekannten Verfahren erfolgen, wie beispielsweise durch einfaches Mischen der einzelnen Komponenten. Das Vermischen erfolgt vorzugsweise bei Raumtemperatur und vorzugsweise wird bei diesem Vermischen der Zutritt von Wasser vermieden. Falls gewünscht, kann dieses Vermischen aber auch bei höheren Temperaturen erfolgen, z.B. bei einer Temperatur im Bereich von 25 bis 80°C.

Für die Vernetzung der erfindungsgemäßen Massen reicht der übliche Wassergehalt der Luft aus. Die Vernetzung kann, falls erwünscht, auch bei höheren Temperaturen als Raumtemperatur, z.B. bei 25 bis 120°C, oder bei niedrigeren Temperaturen als Raumtemperatur, z.B. bei -10 bis 25°C, durchgeführt werden. Ebenso kann die Vernetzung auch bei Konzentrationen von Wasser durchgeführt werden, die den normalen Wassergehalt der Luft übersteigern.

Die erfindungsgemäßen Zusammensetzungen haben den Vorteil, dass sie einfach in der Herstellung sind.

Bei den erfindungsgemäßen Zusammensetzungen auf der Basis von Organosiliciumverbindungen kann es sich um solche handeln, die vernetzbar sind durch Anlagerung von Si-gebundenem Wasserstoff an aliphatische Kohlenstoff-Kohlenstoff-Mehrfachbindung (Vernetzungstyp II).

Vorzugsweise enthalten die erfindungsgemäßen additionsvernetzbaren Zusammensetzungen auf der Basis von Organosiliciumverbindungen
(1) Organosiliciumverbindungen, die SiC-gebundene Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die SiC-gebundene Reste mit aliphatischen Kohlenstoff-Kohlenstoff-Mehrfachbindungen und Si-gebundene Wasserstoffatome aufweisen,
(4) die Anlagerung von Si-gebundenem Wasserstoff an aliphatische Mehrfachbindung fördernden Katalysator,
(5) Aluminiumoxidpulver mit einer spezifischen Oberfläche von mindestens 50 m²/g und einer mittleren Größe der Primärteilchen von 1 bis 50 nm und gegebenenfalls
(6) weitere Stoffe.

Handelt es sich bei der erfindungsgemäßen Zusammensetzungen um eine additionsvernetzende 2-Komponenten-Siliconkautschukmasse, so können die beiden Komponenten der erfindungsgemäßen Siliconkautschukmassen alle Bestandteile in beliebigen Kombinationen und Mengenverhältnissen enthalten, mit der Maßgabe, dass eine Komponente nicht gleichzeitig die Bestandteile (1), (2) und (4) bzw. (3) und (4) enthält.

Bei den Organosiliciumverbindungen (1) handelt es sich vorzugsweise um lineare, cyclische oder verzweigte Siloxane enthaltend Einheiten der Formel (I), mit der Maßgabe, dass die Summe a+b+c kleiner oder gleich 3 beträgt, c bevorzugt 0 ist und mindestens zwei Reste R¹ pro Molekül vorhanden sind.

Besonders bevorzugt handelt es sich bei den Organosiliciumverbindungen (1) um lineare Organopolysiloxane der Struktur
(R¹R₂SiO_{1/2}) x(R₃SiO_{1/2}) ₁₋ₓ (R¹RSiO) ₀₋₅₀ (R₂SiO) ₃₀₋₈₀₀₀ (R¹R₂SiO_{1/2}) ₓ (R₃SiO_{1/2})₁₋ₓ,
wobei R und R¹ gleich oder verschieden sein können, eine der obengenannten Bedeutungen haben und x gleich oder verschieden sein kann und 0 oder 1 ist, mit der Maßgabe, dass mindestens zwei Reste R¹ anwesend sind.

Beispiele für erfindungsgemäß eingesetzte Organopolysiloxane (1) sind trimethylsilylterminierte Polymethylvinylsiloxane und vinyldimethylsilylterminierte Polymethylvinyl/dimethylsiloxane.

Als Organosiliciumverbindungen (2), die Si-gebundene Wasserstoffatome aufweisen, werden vorzugsweise lineare, cyclische oder verzweigte Siloxane enthaltend Einheiten der Formel (I) eingesetzt, mit der Maßgabe, dass die Summe von a+b+c kleiner oder gleich 3 ist, c bevorzugt 0 ist und je Molekül durchschnittlich mindestens zwei Reste R die Bedeutung von Si-gebundenem Wasserstoffatom haben.

Die Organosiliciumverbindungen (2) besitzen vorzugsweise eine Viskosität von 50 bis 10000 mPas bei 25°C.

Beispiele für Polyorganosiloxane (2) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxanund/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Bevorzugt ist die Verwendung einer drei oder mehr SiH-Bindungen pro Molekül enthaltenden Organosiliciumverbindung (2). Bei Verwendung eines nur zwei SiH-Bindungen pro Molekül aufweisenden Bestandteils (2) enthält die Organosiliciumverbindung (1) vorzugsweise mindestens drei aliphatische Kohlenstoff-Kohlenstoff-Mehrfachbindungen pro Molekül. Es wird also vorzugsweise die Organosiliciumverbindung (2) als Vernetzer eingesetzt.

Die Organosiliciumverbindung (2) hat einen Gehalt an Si-gebundenem Wasserstoff von bevorzugt 0,002 bis 1,7 Gew.-% Wasserstoff, besonders bevorzugt zwischen 0,1 und 1,7 Gew.-% Wasserstoff.

Das Polyorganosiloxan (2) ist vorzugsweise in einer solchen Menge in der härtbaren Siliconkautschukmasse enthalten, dass das Molverhältnis von SiH-Gruppen zu Resten mit aliphatischer Kohlenstoff-Kohlenstoff-Mehrfachbindung der Komponente (1) bevorzugt zwischen 0,5 und 6, besonders bevorzugt zwischen 1,5 und 2,5, liegt.

Falls Organosiliciumverbindungen (3) eingesetzt werden, handelt es sich vorzugsweise um sogenannte MQ-Harze mit einer Viskosität von bevorzugt 0,01 bis 500 000 Pa·s, besonders bevorzugt 0,1 bis 150000 Pa·s, jeweils bei 25°C.

Als Bestandteil (4), der die Additionsreaktion (Hydrosilylierung) zwischen den Resten mit aliphatischer Kohlenstoff-Kohlenstoff-Mehrfachbindung und Si-gebundenem Wasserstoff fördert, können in den erfindungsgemäßen Massen alle bisher bekannten Hydrosilylierungskatalysatoren verwendet werden.

Beispiele für Hydrosilylierungskatalysatoren (4) sind Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sein können, sowie Verbindungen und Komplexe der genannten Metalle. Der Hydrosilylierungskatalysator (4) kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlussverbindung, beispielsweise in einem Cyclodextrin, eingesetzt werden.

Vorzugsweise werden als Katalysator (4) Platin sowie dessen Verbindungen und Komplexe verwendet.

Die Menge des Katalysators (4) richtet sich nach der gewünschten Vernetzungsgeschwindigkeit und der jeweiligen Verwendung sowie ökonomischen Gesichtspunkten. Die erfindungsgemäßen Massen enthalten Katalysatoren (4) in solchen Mengen, dass ein Platingehalt von vorzugsweise 0,1 bis 500 Gewichts-ppm (= Gewichtsteile je Million Gewichtsteile), besonders bevorzugt 1 bis 100 Gewichts-ppm, insbesondere 1 bis 50 Gewichts-ppm, jeweils bezogen auf das Gesamtgewicht der vernetzbaren Masse, resultiert.

Erfindungsgemäß eingesetztes Aluminiumoxid (5) wird vorzugsweise in einer Menge von 0,1 bis 20 Gewichtsteilen, besonders bevorzugt 0,2 bis 14 Gewichtsteilen, insbesondere 0,3 bis 3 Gewichtsteilen, je 100 Gewichtsteile durch Additionsreaktion vernetzbare Masse, verwendet.

Außer den Komponenten (1) bis (5) können die erfindungsgemäßen härtbaren Zusammensetzungen noch alle weiteren Stoffe (6) enthalten, die auch bisher zur Herstellung von additionsvernetzbaren Massen eingesetzt wurden, mit der Maßgabe, dass die weiteren Stoffe (6) unterschiedlich sind zu Komponenten (1) bis (5).

Beispiele für weitere Stoffe (6) sind verstärkende Füllstoffe, nicht verstärkende Füllstoffe, harzartige Polyorganosiloxane, die von den Siloxanen (1), (2) und (3) verschieden sind, Dispergierhilfsmittel, Lösungsmittel, Haftvermittler, Pigmente, Farbstoffe, Weichmacher, organische Polymere, Hitzestabilisatoren, Inhibitoren und Stabilisatoren.

Beispiele gebräuchlicher Inhibitoren, die als Komponente (6) eingesetzt werden können, sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Der Inhibitorgehalt der erfindungsgemäßen Zusammensetzungen beträgt vorzugsweise 0 bis 50 000 ppm, besonders bevorzugt 50 bis 2000 ppm.

Beispiele für Füllstoffe, Weichmacher und Hitzestabilisatoren sind die im Zusammenhang mit den kondensationsvernetzbaren Massen oben angegebenen Beispiele.

Die erfindungsgemäßen Massen können - insbesondere je nach Viskosität der Bestandteile sowie Füllstoffgehalt - eine pastöse Konsistenz aufweisen, pulverförmig sein oder auch geschmeidige, hochviskose Massen darstellen, wie dies bekanntermaßen bei den in Fachkreisen häufig als HTV bezeichneten Massen der Fall sein kann. Insbesondere können die erfindungsgemäßen Massen, falls sie hochviskos sind, in Form eines Granulates zubereitet werden.

Die Herstellung der erfindungsgemäßen Organopolysiloxanmassen kann nach bekannten Verfahren erfolgen, wie beispielsweise durch gleichmäßige Vermischung der einzelnen Komponenten. Die einzelnen Komponenten können ganz oder teilweise bereits vorab als Granulate vorliegen.

Über die Komponenten (1) bis (6) hinausgehend enthalten die erfindungsgemäßen durch Additionsreaktion vernetzbaren Massen vorzugsweise keine weiteren Stoffe.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 600°C und einem Druck von 900 bis 1100 hPa. Es können aber auch höhere oder niedrigere Temperaturen und Drücke angewendet werden, abhängig vom Verarbeitungsverfahren.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden.

Die erfindungsgemäßen Zusammensetzungen haben den Vorteil, dass sie einfach in der Herstellung und über einen langen Zeitraum stabil sind.

Die erfindungsgemäßen Zusammensetzungen haben des Weiteren den Vorteil, dass Granulate verschiedener Zusammensetzungen und Shore-Härten miteinander vermischt werden können.

Bei den erfindungsgemäßen Zusammensetzungen auf der Basis von Organosiliciumverbindungen kann es sich um peroxidisch vernetzbare Massen (Vernetzungstyp III) handeln.

Die erfindungsgemäßen peroxidisch vernetzbaren Zusammensetzungen auf der Basis von Organosiliciumverbindungen enthalten vorzugsweise
(A) Organosiliciumverbindungen enthaltend Einheiten der allgemeinen Formel (I), mit der Maßgabe, dass die Summe aus a+b+c kleiner oder gleich 3 ist,
(B) die Vernetzung über freie Radikale bewirkendes Agens,
(C) Aluminiumoxidpulver mit einer spezifischen Oberfläche von mindestens 50 m²/g und einer mittleren Größe der Primärteilchen von 1 bis 50 nm
   und gegebenenfalls
(D) weitere Stoffe.

Vorzugsweise handelt es sich bei den Organosiliciumverbindungen (A) um Organopolysiloxane enthaltend Einheiten der Formel (I), in denen mindestens 70 % aller Si-gebundenene Reste die Bedeutung von SiC-gebundenen Alkylresten, insbesondere Methylreste, haben, wobei es sich bei den Einheiten der Formel (I) bevorzugt um Diorganosiloxaneinheiten handelt.

Die Endgruppen der Organosiliciumverbindungen (A) können Trial-, kylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Beispiele für erfindungsgemäß eingesetzte Organopolysiloxane (A) sind die für Organosiliciumverbinungen (1) oben angegebenen Beispiele.

Bei den Organosiliciumverbindungen (A) kann es sich um Flüssigkeiten oder hochviskose Substanzen handeln. Vorzugsweise weisen die Organosiliciumverbindungen (A) bei 25°C eine Viskosität zwischen 10³ und 10⁸ mm²/s auf.

Bei der Komponente (B) kann es sich um allgemein ein die Vernetzung über Radikale initiierendes oder bewirkendes Agens handeln, welches auch bisher in peroxidisch vernetzbaren Massen eingesetzt wurde, wobei Peroxide, insbesondere organische Peroxide, bevorzugt sind.

Beispiele für Komponente (B) sind Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und 2,5-Bis-(tert.-butylperoxy)-2,5-dimethylhexan bevorzugt sind.

Die erfindungsgemäßen zu Elastomeren vernetzbaren Organopolysiloxanmassen enthalten Komponente (B) in Mengen von vorzugsweise 0,4 bis 2,0 Gewichtsprozent, besonders bevorzugt 0,7 bis 1,5 Gewichtsprozent, jeweils bezogen auf das Gesamtgewicht der peroxidisch vernetzbaren Masse.

Erfindungsgemäß eingesetztes Aluminiumoxid (C) wird vorzugsweise in einer Menge von 0,1 bis 20 Gewichtsteilen, besonders bevorzugt 0,2 bis 14 Gewichtsteile, insbesondere 0,3 bis 3 Gewichtsteile, je 100 Gewichtsteile peroxidisch vernetzbare Masse, verwendet.

Der jeweiligen Anwendung entsprechend können den erfindungsgemäßen zu Elastomeren vulkanisierbaren Massen weitere Stoffe (D) zugesetzt werden, mit der Maßgabe, dass die Zusätze (D) unterschiedlich sind zu Komponente (A) bis (C).

Beispiele für solche weiteren Stoffe (D) sind Füllstoffe, Weichmacher, Pigmente und Stabilisatoren, wie etwa Hitzstabilisatoren.

Beispiele für Füllstoffe, Weichmacher und Hitzstabilisatoren sind die im Zusammenhang mit den kondensationsvernetzbaren Massen oben angegebenen Beispiele.

Falls die erfindungsgemäßen, peroxidisch vernetzbaren Massen Füllstoff als Komponente (D) enthalten, handelt es sich um Mengen von vorzugsweise 1 bis 200 Gewichtsteilen, besonders bevorzugt 30 bis 100 Gewichtsteilen, jeweils bezogen auf 100 Gewichtsteile Organosiliciumverbindung (A).

Darüberhinaus enthalten die erfindungsgemäßen peroxidisch vernetzbaren Massen vorzugsweise keine weiteren Stoffe.

Die Herstellung der erfindungsgemäßen peroxidisch vernetzbaren Organopolysiloxanmassen kann nach bekannten Verfahren erfolgen, wie beispielsweise durch einfaches Mischen der einzelnen Komponenten.

Die erfindungsgemäßen peroxidisch vernetzbaren Massen können bei den gleichen Bedingungen vernetzen gelassen werden wie die bisher bekannten peroxidisch vernetzbaren Massen.

Die erfindungsgemäßen Massen sowie die erfindungsgemäß daraus hergestellten Elastomere können für alle Zwecke eingesetzt werden, für die auch bisher zu Elastomeren vernetzbare Organopolysiloxanmassen bzw. Elastomere verwendet wurden. Die erfindungsgemäßen Massen eignen sich besonders gut zur Herstellung von Kabeln, Kabelisolierungen, -ummantelungen, Formteilen, Profilen, formstabilen unvulkanisierten Profilen und fellfesten Textilbeschichtungen.

Die erfindungsgemäßen Zusammensetzungen haben den Vorteil, dass sie als Granulat automatisch förderbar und als Extrudat oder Walzenfell stand- oder fellfest sind.

Bei den erfindungsgemäßen Zusammensetzungen auf der Basis von Organosiliciumverbindungen kann es sich um durch Strahlung vernetzbare Massen handeln (Vernetzungstyp IV).

Bei den strahlungsvernetzbaren Zusammensetzungen handelt es sich bevorzugt um solche enthaltend
(i) Organosiliciumverbindungen enthaltend Einheiten der Formel (I), mit der Maßgabe, dass die Summe a+b+c kleiner oder gleich 3 ist und Vinylgruppen enthalten sind.
(ii) Aluminiumoxid mit einer spezifischen Oberfläche von mindestens 50 m/g und einer mittleren Größe der Primärteilchen von 1 bis 50 nm,
   gegebenenfalls
(iii) mindestens einen Vernetzer,
   gegebenenfalls
(iv) einen Photopolymerisationsinitiator,
   gegebenenfalls
(v) Füllstoff,
   gegebenenfalls
(vi) Haftvermittler,
   gegebenenfalls
(vii) weitere Stoffe ausgewählt aus der Gruppe enthaltend Weichmacher, Stabilisatoren, Antioxidantien, Flammschutzmittel, Lichtschutzmittel und Pigmente,
   und gegebenenfalls
(viii) Polymerisationsinhibitoren.

Bei diesen erfindungsgemäßen vernetzbaren Zusammensetzungen handelt es sich bevorzugt um Einkomponentenmassen. Zur Bereitung dieser Einkomponentenmassen können die jeweils eingesetzten Bestandteile auf beliebige und bisher bekannte Weise miteinander vermischt werden.

Die Herstellung der erfindungsgemäßen Massen und deren Lagerung erfolgen vorzugsweise unter im Wesentlichen strahlungsfreien, gegebenenfalls wasserfreien Bedingungen, um ein vorzeitiges Reagieren der Massen zu vermeiden.

Beispiele für erfindungsgemäß eingesetzte Organopolysiloxane (i) sind die für Organosiliciumverbinungen (1) oben angegebenen Beispiele.

Erfindungsgemäß eingesetztes Aluminiumoxid (ii) wird vorzugsweise in einer Menge von 0,1 bis 20 Gewichtsteilen, besonders bevorzugt 0,2 bis 14 Gewichtsteilen, insbesondere 0,3 bis 3 Gewichtsteilen, je 100 Gewichtsteile durch Strahlung vernetzbare Masse, verwendet.

Als gegebenenfalls eingesetzte Vernetzer (iii) können alle Vernetzer eingesetzt werden, die auch bisher in durch Strahlung vernetzbaren Massen eingesetzt worden sind; diese enthalten bevorzugt eine strahlungshärtbare, aliphatische Kohlenstoff-Kohlenstoff-Mehrfachbindung.

Bevorzugt handelt es sich bei Vernetzer (iii) um Vinyl- und Allylsilane, Olefine, Acrylate und Methacrylate, besonders bevorzugt um Acrylate und Methacrylate, insbesondere um mono- und difunktionelle Acrylate und Methacrylate.

Beispiele für gegebenenfalls eingesetzten Vernetzer (iii) sind monofunktionelle Oligo(ether) und monomere Acrylate und Methacrylate, wie 2-(2-Ethoxyethoxy) Ethylacrylat, 2-Phenoxyethylacrylat, Caprolactonacrylat, cyclisches Trimethylopropanformalacrylat, ethoxyliertes Nonylphenolacrylat, Isobornylacrylat, Isodecylacrylat, Laurylacrylat, Octyldecylacrylat, Stearylacrylat, Tetrahydrofurfurylacrylat, Tridecylacrylat, 2-Phenoxyethylmethacrylat, ethoxyliertes Hydroxyethylmethacrylat, Isobornylmethacrylat, Laurylmethacrylat, Methoxypolyethylenglycol(350)monomethacrylat, Methoxypolyethylenglycol(550)monomethacrylat, Polypropylenglycolmonomethacrylat, Stearylmethacrylat, Tetrahydrofurfurylmethacrylat;
Difunktionelle Oligo(ether) und monomere Acrylate und Methacrylate, wie 1,6-Hexandioldiacrylat, alkoxylierte Diacrylate, alkoxylierte Hexandioldiacrylate, Diethylenglycoldiacrylat, Dipropylenglycoldiacrylat, Esterdioldiacrylat, ethoxylierte Bisphenol-A-Diacrylate, Polyethylenglycol(200)diacrylat, Polyethylenglycol(400)diacrylat, Polyethylenglycol(600)diacrylat, propoxyliertes Neopentyl Glycoldiacrylat, Tetraethylenglycoldiacrylat, Tricyclodecandimethanoldiacrylat, Triethylene Glycoldiacrylat, Tripropylenglycoldiacrylat, 1,3-Butylenglycoldimethacrylat, 1,4-Butanedioldimethacrylat, 1,6-Hexandioldimethacrylat, Diethylenglycoldimethacrylat, ethoxylierte Bisphenol-A-Dimethacrylate, Ethylenglycoldimethacrylat, Polyethylenglycol(200)dimethacrylat, Polyethylenglycol(400)dimethacrylat, Polyethylenglycol(600)dimethacrylat, Tetraethylenglycoldimethacrylat, Triethylenglycoldimethacrylat;
Tri- & höher funktionelle Oligo(ether) und monomere Acrylate und Methacrylate, wie Dipentaerythritolpentaacrylat, Ditrimethylolpropantetraacrylat, ethoxylierte Trimethylolpropantriacrylate, Pentaerythritoltetraacrylat, Pentaerythritoltriacrylat, propoxylierte Glyceroltriacrylate, propoxyliertes Trimethylolpropantriacrylat, Trimethylolpropantriacrylat, Tris(2-Hydroxyethyl)isocyanurattriacrylat, Trimethylolpropantrimethacrylat;
Epoxyacrylate, wie Bisphenol-A-Epoxyacrylat, epoxidiertes Sojabohnenölacrylat, Epoxynovolacacrylatoligomer, Fettsäuremodifiziertes Bisphenol-A-Epoxyacrylat;
Aliphatische und aromatische Urethanacrylate und Polyesteracrylate;
Silane mit SiC-gebundenen Vinyl-, Allyl-, Acryloxy-, Methacryloxygruppen sowie deren Teil- und Mischhydrolysate; Styrol, Isopren, Butadien und Vinylacetat.

Falls die erfindungsgemäßen vernetzbaren Massen Vernetzer (iii) enthalten, handelt es sich um Mengen von vorzugsweise 0,05 bis 70 Gewichtsteilen, besonders bevorzugt 0,2 bis 30 Gewichtteilen, jeweils bezogen auf 100 Gewichtsteile vernetzbare Masse.

Als gegebenenfalls eingesetzte Photopolymerisationsinitiatoren (iv) können alle dem Fachmann bekannten Initiatoren oder Gemische derselben verwendet werden.

Beispiele für gegebenenfalls eingesetzte Initiatoren (iv) sind Benzildimethylketal, 2-Hydroxy-2-methyl-phenyl-propan-1-on, 1-Hydroxycyclohexylphenylketon, Isopropylthioxanthon, Bisacylphosphinoxid, 1-[4-(2-hydroxyethoxy)phenyl]-2-hydroxy-2-methyl-propan-1-on, Benzoin-n-butylether, polymere Hydroxyketone, wie Oligo(2-hydroxy-2-methyl-1,4-(1-methylvinyl)phenylpropanon), Acenaphthylchinon, α-Aminoacetophenon, Benzanthrachinon, Benzoinmethylether, Benzoinisopropylether, Benzoinisobutylether, Benzophenon, Benzildimethylacetal, Benzil-1-methyl-1-ethylacetal, 2,2-Diethoxy-2-phenylacetophenon, 2,2-Diethoxyacetophenon, 2-Dimethoxybenzoyldiphenylphosphinoxid, 2,2-Dimethoxy-2-phenyl-acetophenon, 2-Ethylanthrachinon, Ethyl-2,4,6-trimethylbenzoyl-phenylphosphinat, Hydroxyacetophenon, 2-Hydroxy-2-methylpropiophenon, 2-Hydroxy-2-methyl-4'-isopropylisopropiophenon, 1-Hydroxycyclohexylphenylketon, 4'-Morpholinodeoxybenzoin, 4-Morpholinobenzophenon, α-Phenylbutyrophenon, 2,4,6-Trimethylbenzoyldiphenylphosphinoxid und 4,4'-Bis(dimethylamino)-benzophenon.

Ein Photopolymerisationsinitiator kann auch in Kombination mit Coinitiatoren, wie Ethylanthrachinon mit 4,4'-Bis(dimethylamino)benzophenon, Benzoinmethylether mit Triphenylphosphin, Benzildimethylketal mit Benzophenone, Diacylphosphineoxide mit tertiären Aminen oder Acyldiarylphosphinoxide mit Benzildimethylacetal, eingesetzt werden.

Falls die erfindungsgemäßen vernetzbaren Massen Photopolymerisationsinitiator (iv) enthalten, handelt es sich um Mengen von vorzugsweise 0,01 bis 5 Gewichtsteilen, bevorzugt 0,05 bis 3 Gewichtteilen, jeweils bezogen auf 100 Gewichtsteile vernetzbare Masse.

Beispiele für Füllstoffe sind die im Zusammenhang mit den kondensationsvernetzbaren Massen oben angegebenen Beispiele.

Falls die erfindungsgemäßen Massen Füllstoffe (v) enthalten, handelt es sich um Mengen von vorzugsweise 1 bis 200 Gewichtsteilen, bevorzugt 30 bis 100 Gewichtsteilen, jeweils bezogen auf 100 Gewichtsteile Organosiliciumverbindung (i).

Als gegebenenfalls eingesetzte Haftvermittler (vi) können alle Haftvermittler eingesetzt werden, die auch bisher in durch Strahlung vernetzbaren Massen eingesetzt worden sind. Beispiele für Haftvermittler (v) sind Silane mit SiC-gebundenen Vinyl-, Acryloxy-, Methacryloxygruppen sowie deren Teil- und Mischhydrolysate, Acrylate wie 2-(2-Ethoxyethoxy)ethylacrylat, 2-Phenoxyethylacrylat, cyclisches Trimethylolpropan-formalacrylat, 1,6-Hexandioldiacrylat, Pentaerythritoltetraacrylat, Tetrahydrofurfurylmethacrylat, Methoxy-Polyethylenglycol(550)-monomethacrylat und Stearylmethacrylat.

Falls die erfindungsgemäßen Massen Haftvermittler (vi) enthalten, handelt es sich um Mengen von vorzugsweise 0,01 bis 5 Gewichtsteilen, bevorzugt 0,5 bis 4 Gewichtsteilen, jeweils bezogen auf 100 Gewichtsteile vernetzbare Masse.

Beispiele für weitere Stoffe (vii) sind Weichmacher, wie trimethylsilylterminierte Polydimethylsiloxane und Kohlenwasserstoffe mit etwa 16 bis 30 Kohlenstoffatomen, Stabilisatoren, wie 2-Etylhexylphosphat, Octylphosphonsäure, Polyether, Antioxidantien, Flammschutzmittel, wie Phosphorsäureester, Lichtschutzmittel und Pigmente, wie Titandioxid und Eisenoxide.

Bevorzugt handelt es sich bei den gegebenenfalls eingesetzten weiteren Stoffen (vii) um Weichmacher, wie trimethylsilylterminierte Polydimethylsiloxane und Kohlenwasserstoffe mit etwa 16 bis 30 Kohlenstoffatomen, Stabilisatoren, wie 2-Etylhexylphosphat, Octylphosphonsäure, Polyether, Flammschutzmittel, wie Phosphorsäureester und Pigmente, wie Titandioxid und Eisenoxide, wobei Stabilisatoren und Pigmente besonders bevorzugt sind.

Falls Bestandteil (vii) eingesetzt wird, handelt es sich um Mengen von bevorzugt 0,01 bis 30 Gewichtsteilen, besonders bevorzugt 0,05 bis 25 Gewichtsteilen, jeweils bezogen auf 100 Gewichtsteile vernetzbare Masse.

Die erfindungsgemäßen Zusammensetzungen können Polymerisationsinhibitoren (viii) enthalten. Aus Gründen der besseren Handhabung ist es bevorzugt, die erfindungsgemäßen Zusammensetzungen mit geringen Mengen Inhibitoren (viii) zu versetzen, um beispielsweise vorzeitige Vernetzung einer verwendungsfähigen Formulierung während deren Lagerung zu verhindern. Beispiele für gegebenenfalls eingesetzte Inhibitoren sind alle gebräuchlichen auch bisher in radikalisch ablaufenden Prozessen eingesetzten Inhibitoren, wie Hydrochinon, 4-Methoxyphenol, 2,6-Ditert.butyl-4-methylphenol oder Phenothi-azin.

Falls Inhibitoren (viii) eingesetzt werden handelt es sich um Mengen von 10 bis 10 000 ppm, besonders bevorzugt 50 bis 1 000 ppm, jeweils bezogen auf Gewichtsteile der vernetzbaren Masse.

Insbesondere enthalten die erfindungsgemäßen Massen außer der Komponente (i), (ii), gegebenenfalls (iii), (iv), (v), (v.i), (vii) und (viii) keine weiteren Bestandteile.

Die Erstellung der erfindungsgemäßen vernetzbaren Massen erfolgt mit Methoden, die dem Fachmann bekannt sind, wie beispielsweise mittels Extrudern, Knetern, Walzenstühlen, dynamischen oder statischen Mischern. Die Herstellung der erfindungsgemäßen Massen kann kontinuierlich oder diskontinuierlich erfolgen. Bevorzugt erfolgt die Herstellung kontinuierlich oder in Kombination kontinuierlich / diskontinuierlich.

Die erfindungsgemäßen Massen können durch Bestrahlen mit Ultraviolettlicht (UV-Licht), Laser oder Sonnenlicht vernetzen gelassen werden. Vorzugsweise werden die erfindungsgemäßen Massen durch UV-Licht vernetzen gelassen. Als UV-Licht ist solches mit Wellenlängen im Bereich von 200 bis 400 nm bevorzugt. Das UV-Licht kann z.B. in Xenon-, Quecksilbernieder-, Quecksilbermittel-, Quecksilberhochdrucklampen oder Eximerlampen erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Massen geeigneten Energiequellen kann es sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Die Bestrahlungswellenlängen und -dauern sind auf die verwendeten Photopolymerisationsinitiatoren und die zu polymerisierenden Verbindungen abgestimmt.

Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, wie beispielsweise bei -50 bis 15°C oder bei 30 bis 150°C durchgeführt werden. Vorzugsweise wird die Vernetzung bei einem Druck von 100 bis 1100 hPa, insbesondere beim Druck der umgebenden Atmosphäre, also etwa 900 bis 1100 hPa, durchgeführt.

Die erfindungsgemäßen Zusammensetzungen können überall dort verwendet werden, wo auch bisher durch Strahlung vernetzbare Massen eingesetzt wurden.

Die erfindungsgemäßen Zusammensetzungen haben die gleichen Vorteile, die bereits im Zusammenhang mit den vernetzbaren Massen des Typs (I) bis (III) oben genannt wurden.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Als Fertigungseinrichtung für alle Beispiele dient ein Extruder mit einem am Spritzkopf aufgesetztem rotierendem Messer, sofern Granulate hergestellt werden sollen. Im Fall der verbesserten Fellfestigkeit wird die Mischung ohne Granulierung verwendet.

### Beispiel 1

100 Teile eines durch Trimethylsiloxygruppen endblockierten Diorganopolysiloxans aus 99,93 Mol% Dimethylsiloxaneinheiten und 0,07 Mol% Vinylmethylsiloxaneinheiten mit einer Viskosität von 8·10⁶ mPa·s werden in einem bei 150°C betriebenen Kneter zunächst mit 50 Teilen pyrogen in der Gasphase erzeugtem Siliciumdioxid mit einer spezifischen Oberfläche von 200 m²/g, dann mit 1 Teil durch Trimethylsiloxygruppen endblockierten Dimethylpolysiloxan mit einer Viskosität von 96 mPa·s, dann mit 7 Teilen eines in den endständigen Einheiten je eine Si-gebundene Hydroxylgruppe aufweisenden Dimethylpolysiloxans mit einer Viskosität von 40 mPa·s, dann erneut mit 1 Teil durch Trimethylsiloxygruppen endblockiertem Dimethylpolysiloxan mit einer Viskosität von 96 mPa·s und mit 1 Gew-% eines Aluminiumoxidpulver mit einer spezifischen Oberfläche von mindestens ca. 100 m²/g und einer mittleren Größe der Primärteilchen von 13 nm (käuflich erhältlich unter der Bezeichnung AEROXIDE® Alu C bei der Degussa AG, Deutschland) versetzt.

Diese Mischung kann nun granuliert oder als fellfeste Mischung eingesetzt werden.

Die Mischung weist eine hohe Fellfestigkeit auf. Diese ist dadurch gekennzeichnet, dass man zwei 1 cm dicke und 5 cm breite Streifen (=Fell) mehrere Tage aufeinander legen kann, ohne dass diese verkleben. Fehlt das Aluminiumoxid, kommt es zur Verklebung. Zieht man an den Streifen, stellt man in der Aluminiumoxidhaltigen Mischung eine wesentlich höhere Reißfestigkeit fest.

### Beispiel 2

100 Teile eines durch Trimethylsiloxygruppen endblockierten Diorganopolysiloxans aus 99,93 Mol% Dimethylsiloxaneinheiten und 0,07 Mol% Vinylmethylsiloxaneinheiten mit einer Viskosität von 8·10⁶ mPa·s werden in einem bei 150°C betriebenen Kneter zunächst mit 50 Teilen pyrogen in der Gasphase erzeugtem Siliciumdioxid mit einer spezifischen Oberfläche von 200 m²/g, dann mit 1 Teil durch Trimethylsiloxygruppen endblockierten Dimethylpolysiloxan mit einer Viskosität von 96 mPa·s, dann mit 7 Teilen eines in den endständigen Einheiten je eine Si-gebundene Hydroxylgruppe aufweisenden Dimethylpolysiloxans mit einer Viskosität von 40 mPa·s, dann erneut mit 1 Teil durch Trimethylsiloxygruppen endblockiertem Dimethylpolysiloxan mit einer Viskosität von 96 mPa·s und mit 1 Gew-% eines Aluminiumoxidpulver mit einer spezifischen Oberfläche von mindestens ca. 100 m²/g und einer mittleren Größe der Primärteilchen von 13 nm (käuflich erhältlich unter der Bezeichnung PEROXIDE® Alu C bei der Degussa AG, Deutschland) versetzt.

Diese Mischung wird nun auf einem Walzenstuhl mit 1,5 % 2,4 Dichlordibenzoylperoxid (Paste 50%ig in Siliconöl) vermischt. Die Mischung weist eine hohe Fellfestigkeit auf. Diese ist dadurch gekennzeichnet, dass man zwei 1 cm dicke und 5 cm breite Streifen (=Fell) mehrere Tage aufeinander legen kann, ohne dass diese verkleben. Fehlt das Aluminiumoxid, kommt es zur Verklebung. Zieht man an den Streifen, stellt man in der Aluminiumoxidhaltigen Mischung eine wesentlich höhere Reißfestigkeit fest.

### Beispiel 3

100 Teile eines durch Trimethylsiloxygruppen endblockierten Diorganopolysiloxans aus 99,93 Mol% Dimethylsiloxaneinheiten und 0,07 Mol% Vinylmethylsiloxaneinheiten mit einer Viskosität von 8·106 mPa·s werden in einem bei 150°C betriebenen Kneter zunächst mit 50 Teilen pyrogen in der Gasphase erzeugtem Siliciumdioxid mit einer spezifischen Oberfläche von 200 m²/g, dann mit 1 Teil durch Trimethylsiloxygruppen endblockierten Dimethylpolysiloxan mit einer Viskosität von 96 mPa·s, dann mit 7 Teilen eines in den endständigen Einheiten je eine Si-gebundene Hydroxylgruppe aufweisenden Dimethylpolysiloxans mit einer Viskosität von 40 mPa·s, dann erneut mit 1 Teil durch Trimethylsiloxygruppen endblockiertem Dimethylpolysiloxan mit einer Viskosität von 96 mPa·s und mit 1 Gew-% eines Aluminiumoxidpulver mit einer spezifischen Oberfläche von mindestens ca. 100 m²/g und einer mittleren Größe der Primärteilchen von 13 nm (käuflich erhältlich unter der Bezeichnung AEROXIDE® Alu C bei der Degussa AG, Deutschland) versetzt.

Diese Mischung wird nun auf einem Walzenstuhl mit 0,7 % Dicumylperoxid (98%ig) vermischt. Zur Homogenisierung wird der Walzenstuhl auf 40 °C erwärmt.

Die Mischung weist nach dem Abkühlen eine hohe Fellfestigkeit auf. Diese ist dadurch gekennzeichnet, dass man zwei 1 cm dicke und 5 cm breite Streifen (=Fell) mehrere Tage aufeinander legen kann, ohne dass diese verkleben. Fehlt das Aluminiumoxid, kommt es zur Verklebung. Zieht man an den Streifen, stellt man in der Aluminiumoxidhaltigen Mischung eine wesentlich höhere Reißfestigkeit fest.

### Beispiel 4

100 Teile eines durch Trimethylsiloxygruppen endblockierten Diorganopolysiloxans aus 99,93 Mol% Dimethylsiloxaneinheiten und 0,07 Mol% Vinylmethylsiloxaneinheiten mit einer Viskosität von 8·10⁶ mPa·s werden in einem bei 150°C betriebenen Kneter zunächst mit 50 Teilen pyrogen in der Gasphase erzeugtem Siliciumdioxid mit einer spezifischen Oberfläche von 200 m²/g, dann mit 1 Teil durch Trimethylsiloxygruppen endblockierten Dimethylpolysiloxan mit einer Viskosität von 96 mPa·s, dann mit 7 Teilen eines in den endständigen Einheiten je eine Si-gebundene Hydroxylgruppe aufweisenden Dimethylpolysiloxans mit einer Viskosität von 40 mPa·s, dann erneut mit 1 Teil durch Trimethylsiloxygruppen endblockiertem Dimethylpolysiloxan mit einer Viskosität von 96 mPa·s und mit 1 Gew-% eines Aluminiumoxidpulver mit einer spezifischen Oberfläche von mindestens ca. 100 m²/g und einer mittleren Größe der Primärteilchen von 13 nm (käuflich erhältlich unter der Bezeichnung PEROXIDE® Alu C bei der Degussa AG, Deutschland) versetzt.

Diese Mischung wird nun auf einem Walzenstuhl mit 1,2 % 2,5 Bis(t-butylperoxy)-2,5-dimethylhexan als 50%ige Paste in Siliconkautschuk (käuflich erhältlich unter der Bezeichnung "Varox") vermischt.
Die Mischung weist eine hohe Fellfestigkeit auf. Diese ist dadurch gekennzeichnet, dass man zwei 1 cm dicke und 5 cm breite Streifen (=Fell) mehrere Tage aufeinander legen kann, ohne dass diese verkleben. Fehlt das Aluminiumoxid, kommt es zur Verklebung. Zieht man an den Streifen, stellt man in der Aluminiumoxidhaltigen Mischung eine wesentlich höhere Reißfestigkeit fest.

### Beispiel 5

100 Teile eines durch Trimethylsiloxygruppen endblockierten Diorganopolysiloxans aus 99,93 Mol% Dimethylsiloxaneinheiten und 0,07 Mol% Vinylmethylsiloxaneinheiten mit einer Viskosität von 8·10⁶ mPa·s werden in einem bei 150°C betriebenen Kneter zunächst mit 50 Teilen pyrogen in der Gasphase erzeugtem Siliciumdioxid mit einer spezifischen Oberfläche von 200 m²/g, dann mit 1 Teil durch Trimethylsiloxygruppen endblockierten Dimethylpolysiloxan mit einer Viskosität von 96 mPa·s, dann mit 7 Teilen eines in den endständigen Einheiten je eine Si-gebundene Hydroxylgruppe aufweisenden Dimethylpolysiloxans mit einer Viskosität von 40 mPa·s, dann erneut mit 1 Teil durch Trimethylsiloxygruppen endblockiertem Dimethylpolysiloxan mit einer Viskosität von 96 mPa·s und mit 1 Gew-% eines Aluminiumoxidpulver mit einer spezifischen Oberfläche von mindestens ca. 100 m²/g und einer mittleren Größe der Primärteilchen von 13 nm (käuflich erhältlich unter der Bezeichnung AEROXIDE® Alu C bei der Degussa AG, Deutschland) versetzt.

Diese Mischung wird nun in einem Innenmischer mit 0,7 % Dicumylperoxid (98%ig) vermischt. Zur Homogenisierung wird der Walzenstuhl auf 40°C erwärmt.

Die Mischung weist eine hohe Fellfestigkeit auf. Diese ist dadurch gekennzeichnet, dass man zwei 1 cm dicke und 5 cm breite Streifen (=Fell) mehrere Tage aufeinander legen kann, ohne dass diese verkleben. Fehlt das Aluminiumoxid, kommt es zur Verklebung. Zieht man an den Streifen, stellt man in der Aluminiumoxidhaltigen Mischung eine wesentlich höhere Reißfestigkeit fest.

### Beispiel 6

100 Teile eines durch Trimethylsiloxygruppen endblockierten Diorganopolysiloxans aus 99,93 Mol% Dimethylsiloxaneinheiten und 0,07 Mol% Vinylmethylsiloxaneinheiten mit einer Viskosität von 8·10⁶ mPa·s werden in einem bei 150°C betriebenen Kneter zunächst mit 50 Teilen pyrogen in der Gasphase erzeugtem Siliciumdioxid mit einer spezifischen Oberfläche von 200 m²/g, dann mit 1 Teil durch Trimethylsiloxygruppen endblockierten Dimethylpolysiloxan mit einer Viskosität von 96 mPa·s, dann mit 7 Teilen eines in den endständigen Einheiten je eine Si-gebundene Hydroxylgruppe aufweisenden Dimethylpolysiloxans mit einer Viskosität von 40 mPa·s, dann erneut mit 1 Teil durch Trimethylsiloxygruppen endblockiertem Dimethylpolysiloxan mit einer Viskosität von 96 mPa·s und mit 1 Gew-% eines Aluminiumoxidpulver mit einer spezifischen Oberfläche von mindestens ca. 100 m²/g und einer mittleren Größe der Primärteilchen von 13 nm (käuflich erhältlich unter der Bezeichnung AEROXIDE® Alu C bei der Degussa AG, Deutschland) versetzt.

Diese Mischung wird nun in einem Innenmischer mit 1,2 % 2,5 Bis(t-butylperoxy)-2,5-dimethylhexan als 50%ige Paste in Siliconkautschuk (käuflich erhältlich unter der Bezeichnung "Varox") vermischt.
Die Mischung weist eine hohe Fellfestigkeit auf. Diese ist dadurch gekennzeichnet, dass man zwei 1 cm dicke und 5 cm breite Streifen (=Fell) mehrere Tage aufeinander legen kann, ohne dass diese verkleben. Fehlt das Aluminiumoxid, kommt es zur Verklebung. Zieht man an den Streifen, stellt man in der Aluminiumoxidhaltigen Mischung eine wesentlich höhere Reißfestigkeit fest.

### Beispiel 7

100 Teile eines durch Trimethylsiloxygruppen endblockierten Diorganopolysiloxans aus 99,93 Mol% Dimethylsiloxaneinheiten und 0,07 Mol% Vinylmethylsiloxaneinheiten mit einer Viskosität von 8·10⁶ mPa·s werden in einem bei 150°C betriebenen Kneter zunächst mit 50 Teilen pyrogen in der Gasphase erzeugtem Siliciumdioxid mit einer spezifischen Oberfläche von 200 m²/g, dann mit 1 Teil durch Trimethylsiloxygruppen endblockierten Dimethylpolysiloxan mit einer Viskosität von 96 mPa·s, dann mit 7 Teilen eines in den endständigen Einheiten je eine Si-gebundene Hydroxylgruppe aufweisenden Dimethylpolysiloxans mit einer Viskosität von 40 mPa·s, dann erneut mit 1 Teil durch Trimethylsiloxygruppen endblockiertem Dimethylpolysiloxan mit einer Viskosität von 96 mPa·s und mit 1 Gew-% eines Aluminiumoxidpulver mit einer spezifischen Oberfläche von mindestens ca. 100 m²/g und einer mittleren Größe der Primärteilchen von 13 nm (käuflich erhältlich unter der Bezeichnung PEROXIDE® Alu C bei der Degussa AG, Deutschland) versetzt.

Diese Hälfte der Mischung wird nun auf einem Walzenstuhl mit 0,9 % Platin-1,3-Divinyl-1,1,3,3-tetramethyldisiloxan-Komplex (1%ig in Siliconpolymer) vermischt (A-Komponente).
Die andere Hälfte der Mischung wird nun auf einem Walzenstuhl mit 2 % Si-H-Vernetzer (Zubereitung und 1% Inhibitor (Ethinylcyclohexanolzubereitung in Siliconkautschuk)) vermischt (B-Komponente).

Die Mischung weist eine hohe Fellfestigkeit auf. Diese ist dadurch gekennzeichnet, dass man zwei 1 cm dicke und 5 cm breite Streifen (=Fell) mehrere Tage aufeinander legen kann, ohne dass diese verkleben. Fehlt das Aluminiumoxid, kommt es zur Verklebung. Zieht man an den Streifen, stellt man in der Aluminiumoxidhaltigen Mischung eine wesentlich höhere Reißfestigkeit fest.

Diese Mischungen aus den Beispielen 1-6 können einzeln oder miteinander vermischt werden.

In allen Fällen lassen sich Granulate durch Extrusion durch eine Lochplatte mittels rotierendem Messer herstellen.

Granulate aus A- und B-Komponente des letzten Beispieles können in einer Mischtrommel vorgemischt und anschließend wie ein Einkomponentensystem verarbeitet werden.
Oder, sie können getrennt voneinander zu einer Verarbeitungsmaschine zugeführt werden, die die Vermischung bewerkstelligt.

Die peroxidisch vernetzten Granulate können vorab eingefärbt sein oder kurz vor der Verarbeitung mittels einem nach Beispiel 1 hergestellten Pigmentmasterbatches verarbeitet werden.

Daraus mittels peroxidischem oder Additionsvernetzungssystem versehene verarbeitungsfertige Mischungen sind als Ein- oder Mehrkomponentensysteme problemlos granulierbar.

### Vergleichsbeispiel 1-7

Die in Beispiel 1-7 beschriebene Verfahrensweise wird wiederholt mit der Abänderung, dass kein Aluminiumoxidpulver zugegeben wird. Die erhaltenen vernetzbaren Massen können nicht granuliert werden, sondern verschmieren lediglich Lochplatte und Messer. Die Mischungen sind klebrig und nicht fellfest.

## Patentansprüche

1. Zusammensetzungen enthaltend Organosiliciumverbindungen und Aluminiumoxidpulver mit einer spezifischen Oberfläche von mindestens 50 m²/g und einer mittleren Größe der Primärteilchen von 1 bis 50 nm.

2. Zusammensetzung gemäß Anspruch 1, **dadurch gekennzeichnet, dass** es sich um hochdisperses, pyrogen hergestelltes Aluminiumoxid handelt.

3. Zusammensetzung gemäß Anspruch 1 oder 2, **dadurch gekennzeichnet, dass** sie Aluminiumoxidpulver in Mengen von 0,1 bis 20 Gewichtsteilen, bezogen auf 100 Gewichtsteile der erfindungsgemäßen Zusammensetzung, enthalten.

4. Zusammensetzung gemäß einem oder mehreren der Ansprüche 1 bis 3, **dadurch gekennzeichnet, dass** es sich um ein Granulat handelt.

5. Zusammensetzung gemäß einem oder mehreren der Ansprüche 1 bis 3, **dadurch gekennzeichnet, dass** es sich um unter Ausschluss von Wasser lagerfähige, bei Zutritt von Wasser bei Raumtemperatur durch Kondensation zu Elastomeren vernetzbare Massen handelt.

6. Zusammensetzung gemäß einem oder mehreren der Ansprüche 1 bis 3, **dadurch gekennzeichnet, dass** es sich um durch Anlagerung von Si-gebundenem Wasserstoff an aliphatische Kohlenstoff-Kohlenstoff-Mehrfachbindung vernetzbare Massen handelt.

7. Zusammensetzung gemäß einem oder mehreren der Ansprüche 1 bis 3, **dadurch gekennzeichnet, dass** es sich um peroxidisch vernetzbare Massen handelt.

8. Zusammensetzung gemäß einem oder mehreren der Ansprüche 1 bis 3, **dadurch gekennzeichnet, dass** es sich um durch Strahlung vernetzbare Massen handelt.

9. Verfahren zur Herstellung von Granulaten auf der Basis von Organosiliciumverbindungen, **dadurch gekennzeichnet, dass** in einer Mischvorrichtung Organosiliciumverbindungen und Aluminiumoxid mit einer spezifischen Oberfläche von mindestens 50 m²/g und einer mittleren Größe der Primärteilchen von 1 bis 50 nm miteinander vermischt werden und anschließend mit Granuliermitteln das Granulat ausgeformt wird.

10. Formkörper hergestellt durch Vernetzung der Massen gemäß einem oder mehreren der Ansprüche 4 bis 7.

## Claims

1. Compositions comprising organosilicon compounds and aluminium oxide powder with a specific surface area of at least 50 m²/g and with an average primary particle size of from 1 to 50 nm.

2. Composition according to Claim 1, **characterized in that** it involves a fine-particle fumed aluminium oxide.

3. Composition according to Claim 1 or 2,
**characterized in that** it comprises amounts of from 0.1 to 20 parts by weight, based on 100 parts by weight of the composition of the invention, of aluminium oxide powder.

4. Composition according to one or more of Claims 1 to 3, **characterized in that** it involves pellets.

5. Composition according to one or more of Claims 1 to 3, **characterized in that** it involves compositions that can be stored if water is excluded and that on ingress of water at room temperature can be crosslinked via condensation to give elastomers.

6. Composition according to one or more of Claims 1 to 3, **characterized in that** it involves compositions that can be crosslinked via an addition reaction of Si-bonded hydrogen onto an aliphatic carbon-carbon multiple bond.

7. Composition according to one or more of Claims 1 to 3, **characterized in that** it involves compositions that can be crosslinked peroxidically.

8. Composition according to one or more of Claims 1 to 3, **characterized in that** it involves compositions that can be crosslinked via radiation.

9. Process for the production of pellets based on organosilicon compounds, **characterized in that** organosilicon compounds and aluminium oxide with a specific surface area of at least 50 m²/g and with an average primary particle size of from 1 to 50 nm are mixed with one another in a mixing apparatus and the pellets are then shaped using pelletizers.

10. Moulding produced via crosslinking of the compositions according to one or more of Claims 4 to 7.

## Revendications

1. Compositions contenant des composés organosiliciés et de la poudre d'oxyde d'aluminium ayant une surface spécifique d'au moins 50 m²/g et une taille moyenne des particules primaires de 1 à 50 nm.

2. Composition selon la revendication 1, **caractérisée en ce qu'**il s'agit d'un oxyde d'aluminium hautement dispersé produit par pyrogénation.

3. Composition selon la revendication 1 ou 2,
**caractérisée en ce qu'**elle contient de la poudre d'oxyde d'aluminium en quantités de 0,1 à 20 parties en poids, par rapport à 100 parties en poids de la composition selon l'invention.

4. Composition selon une ou plusieurs des revendications 1 à 3, **caractérisée en ce qu'**il s'agit d'un produit granulé.

5. Composition selon une ou plusieurs des revendications 1 à 3, **caractérisée en ce qu'**il s'agit de matières aptes au stockage à l'abri de l'eau, réticulables par condensation en élastomères à la température ambiante, lors d'entrée d'eau.

6. Composition selon une ou plusieurs des revendications 1 à 3, **caractérisée en ce qu'**il s'agit de matières réticulables par fixation par addition d'hydrogène lié à Si sur une liaison multiple carbone-carbone aliphatique.

7. Composition selon une ou plusieurs des revendications 1 à 3, **caractérisée en ce qu'**il s'agit de matières réticulables à l'aide de peroxydes.

8. Composition selon une ou plusieurs des revendications 1 à 3, **caractérisée en ce qu'**il s'agit de matières réticulables par irradiation.

9. Procédé pour la production de granulés à base de composés organosiliciés, **caractérisé en ce que** dans un appareil de mélange on mélange entre eux des composés organosiliciés et de l'oxyde d'aluminium ayant une surface spécifique d'au moins 50 m²/g et une taille moyenne des particules primaires de 1 à 50 nm et ensuite on met en forme le produit granulé à l'aide de moyens de granulation.

10. Corps moulé, produit par réticulation des matières selon une ou plusieurs des revendications 4 à 7.
